(19) Europäisches Patentamt
European Patent Office
Office européen des brevets

(11) **EP 4 768 154 A1**

(12) **EUROPEAN PATENT APPLICATION**

(43) Date of publication:
**01.07.2026 Bulletin 2026/27**

(21) Application number: **25227269.5**

(22) Date of filing: **25.12.2025**

(51) International Patent Classification (IPC):
**B22D 17/20** (2006.01)   **B22D 17/22** (2006.01)
**B29C 45/00** (2006.01)

(52) Cooperative Patent Classification (CPC):
**B22D 17/22; B22D 17/2015; B22D 17/2053;
B29C 45/00; B29C 45/76; B29C 45/7693**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **31.12.2024 CN 202411977570**

(71) Applicant: **Ningbo LK Technology Co., Ltd.
Ningbo City, Zhejiang Province 315000 (CN)**

(72) Inventors:
  • **FENG, Guangming**
    **Ningbo, 315000 (CN)**
  • **GUO, Long**
    **Ningbo, 315000 (CN)**
  • **HU, Jiangpin**
    **Ningbo, 315000 (CN)**
  • **CHEN, Haoyu**
    **Ningbo, 315000 (CN)**
  • **WANG, Libiao**
    **Ningbo, 315000 (CN)**
  • **JIANG, Chaoyu**
    **Ningbo, 315000 (CN)**
  • **CHEN, Kailin**
    **Ningbo, 315000 (CN)**
  • **ZHANG, Ruiting**
    **Ningbo, 315000 (CN)**

(74) Representative: **Miller, Ronald Anthony
    76 Bramley Avenue
    Melbourn
    Royston, Hertfordshire SG8 6HG (GB)**

(54) **DIE CASTING MACHINE WITH SINGLE AND DOUBLE INJECTION, AND METHOD FOR DESIGNING FRONT PLATE THEREOF**

(57) Disclosed are a die casting machine with single and double injection, and a method for designing a front plate thereof. The die casting machine with single and double injection includes a front plate, an injection lower frame, and an injection module. The front plate and the injection lower frame are fixed and spaced apart. If a quantity of the injection module is one, the injection module is mounted in the middle of the injection lower frame and is matched with a connector in the middle of the front plate. If a quantity of the injection modules is two, the injection modules are symmetrically mounted at two sides of the injection lower frame and are matched with connectors at two sides of the front plate respectively. The method for designing a front plate is used to design the front plate of the die casting machine with single and double injection. The present disclosure has the following beneficial effects: compared with two traditional die casting modes with independent single injection and with independent double injection, the present disclosure can achieve a single injection mode and a double injection mode only by changing the quantity of injection modules, and can be adjusted according to actual production needs. Thus, the application scope of the present disclosure can be effectively improved, and production cost can be effectively reduced.

FIG. 1

## Description

### TECHNICAL FIELD

The present invention relates to the technical field of die casting machines, and particularly relates to a die casting machine with single and double injection, and a method for designing a front plate thereof.

### BACKGROUND

With development of the material technology for die-cast aluminum alloy, its fluidity, strength and toughness can be significantly improved. Thus, a size of metal products capable of being produced through die casting gradually increases. For example, integrated die casting of an automobile body can be implemented.

Due to an increase in size of die-cast products, cavity distances of corresponding die casting molds gradually increase. During die casting of large-size products, traditional die casting machines use a single injection mode, which makes die casting time of the products longer, and further influences processing accuracy of the products. Therefore, a die casting machine with single and double injection has been proposed in the prior art. That is, the die casting machine has two injection mechanisms, and can simultaneously die-cast a die casting mold to improve die casting efficiency and die casting accuracy.

However, existing die casting machines with single injection and existing die casting machines with single and double injection are generally used independently. This leads to the situation that enterprises need to purchase die casting machines with single injection and die casting machines with single and double injection at the same time when producing products of different types and sizes, causing higher production cost burden of the products.

### SUMMARY

One objective of the present invention is to provide a die casting machine with single and double injection, which can overcome at least one defect in the background art.

Another objective of the present invention is to provide a method for designing a front plate, which can overcome at least one defect in the background art.

To achieve at least one of the above objectives, the present invention uses the technical solution as follows: A die casting machine with single and double injection includes a front plate, an injection lower frame, and an injection module. The front plate and the injection lower frame are fixed and spaced apart. If a quantity of the injection module is one, the injection module is mounted in a middle of the injection lower frame and is matched with a connector in a middle of the front plate. If a quantity of the injection modules is two, the injection modules are symmetrically mounted at two sides of the injection lower frame and are matched with connectors at two sides of the front plate respectively.

Preferably, regions between the connector in the middle of the front plate and the connectors at the two sides of the front plate are main ribs. Regions between the connectors at the two sides of the front plate and side edges of the front plate are secondary ribs. A thickness of the main ribs is greater than a thickness of the secondary ribs. A width of the main ribs is less than a width of the secondary ribs.

Preferably, the thickness of the main ribs is 1.4 times to 1.6 times the thickness of the secondary ribs. The width of the main ribs is 0.5 times to 0.7 times the width of the secondary ribs.

Preferably, the injection lower frame includes a connecting section, an oil tank and a mounting section that are sequentially arranged. The connecting section is fixedly connected to a clamping lower frame configured to mount the front plate. The mounting section is configured to mount the injection module. The oil tank is provided with three oil inlets in a width direction. If the mounting section is provided with one injection module, the one injection module is connected to a middle one of the three oil inlets. If the mounting section is provided with two injection modules, the two injection modules are connected to other two of the three oil inlets at two sides respectively.

Preferably, the oil tank is divided into a plurality of regions through a plurality of partition plates staggered horizontally and vertically. Upper portions of at least part of the partition plates are provided with notches to enable air circulation between the divided adjacent regions. Lower portions of at least part of the partition plates are provided with notches to enable oil circulation between the divided adjacent regions.

A method for designing a front plate of the die casting machine with single and double injection includes the following design steps:

S100: initially determining an outer contour size of the front plate according to a structural size of the injection module;

S200: calculating a total stress area of the front plate according to an ejection impact force of the injection module and a clamping force of the die casting machine;

S300: dividing, based on strength check and calculation of the front plate under the clamping force, a stress area of the front plate into proportions of the main ribs and the secondary ribs formed between the plurality of connectors of the front plate; and

S400: analyzing stress and strain of the front plate through finite element analysis software, and obtaining thickness sizes of the main ribs and the secondary ribs having a minimum stress peak value and minimum deformation.

Preferably, S200 includes the following process:

S210: calculating a clamping force $F_S$ applied to the front plate by a clamping cylinder according to output pressure P of the clamping cylinder of the die casting machine and a piston rod diameter D of the clamping cylinder;

S220: setting the ejection impact force $F_C \leq kF_S$ applied to the front plate by the injection module, where k denotes a safety factor; and

S230: calculating the total stress area S of the front plate according to a formula $F_C = P_0 \cdot S$, where $P_0$ denotes output pressure of an injection cylinder of the injection module.

Preferably, a value of the safety factor k is 1.05 to 1.15.

Preferably, S300 includes the following process:

S310: obtaining a width size relational expression between the main ribs and the secondary ribs according to the outer contour size of the front plate;

S320: performing dangerous section division on all stressed sections of the front plate according to structural distribution of the main ribs and the secondary ribs;

S330: setting a standard, and calculating a centroid according to a size and a position of each dangerous section obtained in S320;

S340: calculating an inertia moment of each dangerous section to a centroidal axis according to a centroid position expression obtained in S330;

S350: substituting an obtained inertia moment expression into a bending moment calculation formula, and deriving an expression of maximum bending stress at the dangerous section; and

S360: performing iteration on the expression of the maximum bending stress according to a limited clamping force and safe stress of a material, and obtaining optimal width sizes of the main ribs and the secondary ribs.

Preferably, in S330, for the vertical front plate, a horizontal line passing a center of the connector in the middle of the front plate is used as a standard. Or, a horizontal line passing centers of the connectors at the two sides of the front plate is used as a standard.

Compared with the prior art, the present invention has the beneficial effects:

Compared with two traditional die casting modes with independent single injection and with independent double injection, the present invention can achieve a single injection mode and a double injection mode only by changing the quantity of injection modules, and can be adjusted according to actual production needs. Thus, the application scope of the present invention can be effectively improved, and production cost can be effectively reduced.

## BRIEF DESCRIPTION OF THE DRAWINGS

FIG. 1 is a schematic diagram of an overall structure of a die casting machine with single and double injection during double-injection mounting in the present invention.

FIG. 2 is a schematic structural diagram of a die casting machine with single and double injection in the present invention with an injection module removed.

FIG. 3 is a schematic diagram of a local structure of a front plate in the present invention.

FIG. 4 is a schematic structural diagram of an injection lower frame in the present invention.

FIG. 5 is a schematic flowchart of a method for designing a front plate in the present invention.

FIG. 6 is a stress contour plot of a front plate of the present invention under finite element simulation.

FIG. 7 is a stress contour plot of Comparative Example 1 of the front plate shown in FIG. 6 in the present invention under finite element simulation.

FIG. 8 is a stress contour plot of Comparative Example 2 of the front plate shown in FIG. 6 in the present invention under finite element simulation.

FIG. 9 is a strain contour plot of a front plate of the present invention under finite element simulation.

FIG. 10 is a strain contour plot of Comparative Example 1 of the front plate shown in FIG. 9 in the present invention under finite element simulation.

FIG. 11 is a strain contour plot of Comparative Example 2 of the front plate shown in FIG. 9 in the present invention under finite element simulation.

In the figures: clamping lower frame 100, front plate 200, main rib 201, secondary rib 202, injection lower frame 300, connecting section 310, oil tank 320, oil inlet 321, partition plate 322, notch 323, mounting section 330, injection module 400.

## DETAILED DESCRIPTIONS OF THE EMBODIMENTS

The present invention will be further described below in combination with specific implementations. It should be noted that, in the description, reference to terms such as "one embodiment", "some embodiments", "example", "specific example", or "some examples" means that specific features, structures, materials, or characteristics described in conjunction with the embodiment or example are included in at least one of the embodiments or examples of the present invention. In the description, it should be understood that illustrative expressions of the above-mentioned terms do not necessarily refer to identical embodiments or examples.

Moreover, the described specific features, structures, materials or characteristics may be combined in a suitable manner in any one or more embodiments or examples. In addition, those skilled in the art may combine and associate different embodiments or examples described in the description.

In the description of the present invention, it should be noted that, for orientation words, the terms "central", "transverse", "longitudinal", "length", "width", "thickness", "upper", "lower", "front", "back", "left", "right", "vertical", "horizontal", "top", "bottom", "inner", "outer", "clockwise", or "anticlockwise" indicate orientation or position relationships based on those shown in the drawings only for ease of description of the present invention and for simplicity of description, and are not intended to indicate or imply that the referenced device or element must have a particular orientation and be constructed and operated in a particular orientation, and thus cannot be construed as a limitation on a specific protection scope of the present invention.

It should be noted that the terms such as "first" and "second" in the description and claims of the present invention are used to distinguish between similar objects and not necessarily to describe a particular order or sequential order.

In the present invention, unless expressly specified and limited otherwise, the terms "mount", "connect", "connection" and "fix" are to be construed broadly. For example, they can denote connection, detachable connection, or integral connection, denote mechanical connection or electric connection, denote direct connection or indirect connection through an intermediate medium, or denote communication between interiors of two elements or interaction between two elements. For those of ordinary skill in the art, specific meanings of the terms in the present invention may be understood according to specific circumstances.

In the present invention, unless otherwise specified and limited, a case of a first feature "on" or "under" a second feature may include direct contact between the first and second features, or may include a case that the first and second features are not in direct contact with each other and are in contact with each other through another feature therebetween. Moreover, a case of the first feature "on", "above" and "at an upper portion of" the second feature includes a case that the first feature is directly above and obliquely above the second feature, or only indicates that a horizontal height of the first feature is greater than that of the second feature. A case of the first feature "under", "below" and "at a lower portion of" the second feature includes a case that the first feature is directly below and obliquely below the second feature, or only indicates that a horizontal height of the first feature is less than that of the second feature.

The terms "include", "comprise" and "have" in the description and claims of the present invention as well as any variations thereof are intended to cover non-exclusive inclusion. For example, processes, methods, systems, products or apparatuses including a series of steps or units do not need to be limited by steps or units explicitly listed, and may include other steps or units not explicitly listed or inherent to the processes, methods, products, or apparatuses.

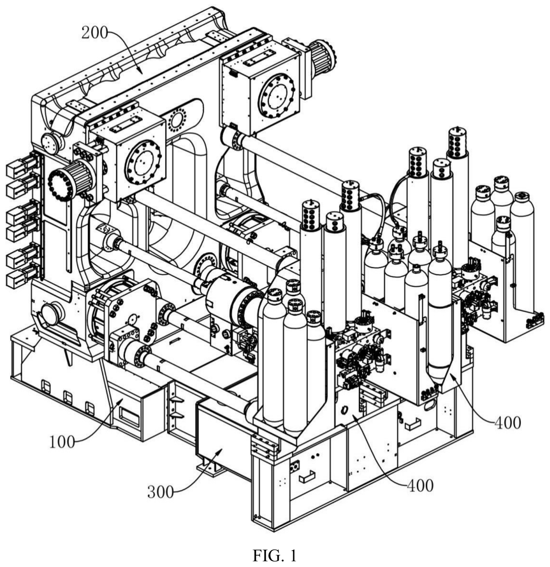

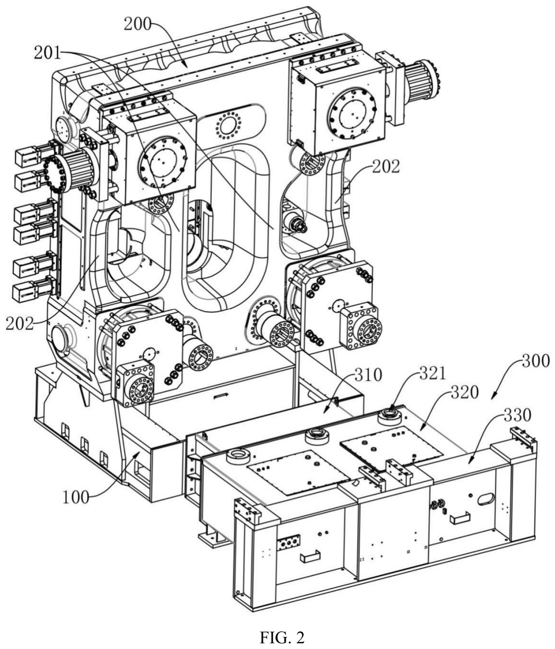

One aspect of the present invention provides a die casting machine with single and double injection. As shown in FIG. 1 and FIG. 2, one preferred embodiment includes a front plate 200, an injection lower frame 300, and an injection module 400. The front plate 200 is fixed. The front plate 200 is configured to mount a die casting mold (not shown in the figure). The front plate 200 is provided with three connectors in a width direction. One of the connectors is located in the middle of the front plate 200, and the other two connectors are located at two sides of the middle connector respectively. The injection lower frame 300 is fixed, and the injection lower frame 300 and the front plate 200 are spaced apart. The injection lower frame 300 is configured to mount the injection module 400. When die casting with single injection is needed, one injection module 400 may be mounted in the middle of the injection lower frame 300 and matched with the connector in the middle of the front plate 200. When die casting with double injection is needed, two injection modules 400 may be symmetrically mounted at two sides of the injection lower frame 300 and matched with the connectors at two sides of the front plate 200 respectively.

It may be understood that, for the die casting machine with single and double injection of the present invention, no matter whether die casting with single injection or double injection is performed, quantities and an overall connection relationship of the front plate 200 and the injection lower frame 300 are not changed, and only a quantity and mounting positions of the injection modules 400 are changed. For an enterprise, only three injection modules 400 are needed at most to implement die casting with single injection and die casting with double injection. Compared with a traditional mode requiring two sets of die casting apparatuses, the present invention can effectively improve an application scope and effectively reduce production cost.

It should be noted that models of the injection modules 400 used in a single injection mode and a double injection mode of the present invention may be identical or not. For the injection modules 400 of the identical model, the present invention may implement the single injection mode and the double injection mode of the die casting machine only by arranging two injection modules 400. For the injection modules 400 of different models, the present invention may implement the single injection mode and the double injection mode of the die casting machine by arranging three injection modules 400. A specific model of the injection module 400 may be self-selected according to actual needs of those skilled in the art. A specific structure and a working principle of the injection module 400 are well known to those skilled in the art, and will not be described in detail herein.

In the embodiment, as shown in FIG. 1 to FIG. 3, regions between the connector in the middle of the front plate 200 and the connectors at the two sides of the front plate are main ribs 201, and regions between the connectors at the two sides of the front plate 200 and side edges of the front plate are secondary ribs 202. When a structure of the front plate 200 is designed, it is necessary to design a thickness of the main ribs 201 to be greater than that of the secondary ribs 202, and set a width of the main ribs 201 to be less than that of the secondary ribs 202.

It may be understood that the connectors provided on the front plate 200 are configured to be connected to ejection rods on the injection modules 400. In order to facilitate mounting of the ejection rods, regions near the connectors on the front plate 200 need to be provided with avoidance spaces. When die casting with single injection is performed, an ejection impact force applied to the front plate 200 by the injection module 400 is mainly concentrated near the main ribs 201. When die casting with double injection is performed, ejection impact forces applied to the front plate 200 by the injection modules 400 may be dispersed at the main ribs 201 and the secondary ribs 202 at two sides of the corresponding connectors. No matter whether die casting with single injection or double injection is performed, the main ribs 201 need to be impacted. That is, a working environment of the main ribs 201 is worse than that of the secondary ribs 202. As the ejection impact force applied by the injection module 400 may mainly cause the front plate 200 to bend, the thickness of the main ribs 201 is designed to be greater than that of the secondary ribs 202 when the main ribs 201 and the secondary ribs 202 are designed. In this way, positions of the main ribs 201 can be ensured to have a stronger section modulus of bending, and further working safety of the front plate 200 can be ensured. For a width design of the main ribs 201 and the secondary ribs 202, the larger front plate 200 has a greater weight, so the widths of the main ribs 201 and the secondary ribs 202 need to be reduced as much as possible in a case of satisfying structural strength. Thickness size designs of the main ribs 201 and the secondary ribs 202 are considered. In order to ensure that the secondary ribs 202 satisfy a structural strength requirement, it is necessary to design the width of the secondary ribs 202 to be greater than that of the main ribs 201.

Specifically, thickness and width size designs of the main ribs 201 and the secondary ribs 202 will be described in detail below through specific design methods. It can be ensured that design sizes of the front plate 200 having better performance are that the thickness of the main ribs 201 is 1.4 times to 1.6 times that of the secondary ribs 202, and the width of the main ribs 201 is 0.5 times to 0.7 times that of the secondary ribs 202.

In the embodiment, as shown in FIG. 1 and FIG. 2, the injection lower frame 300 includes a connecting section 310, an oil tank 320, and a mounting section 330 that are sequentially arranged. The connecting section 310 is fixedly connected to a clamping lower frame 100 configured to mount the front plate 200. Thus, structural stability of the entire die casting machine is ensured, and further accuracy in an injection process is ensured. The mounting section 330 is configured to mount the injection module 400. The oil tank 320 is provided with three oil inlets 321 in a width direction. If the mounting section 330 is provided with one injection module 400, the injection module 400 is connected to the middle oil inlet 321. If the mounting section 330 is provided with a pair of injection modules 400, the injection modules 400 are connected to the oil inlets 321 at two sides.

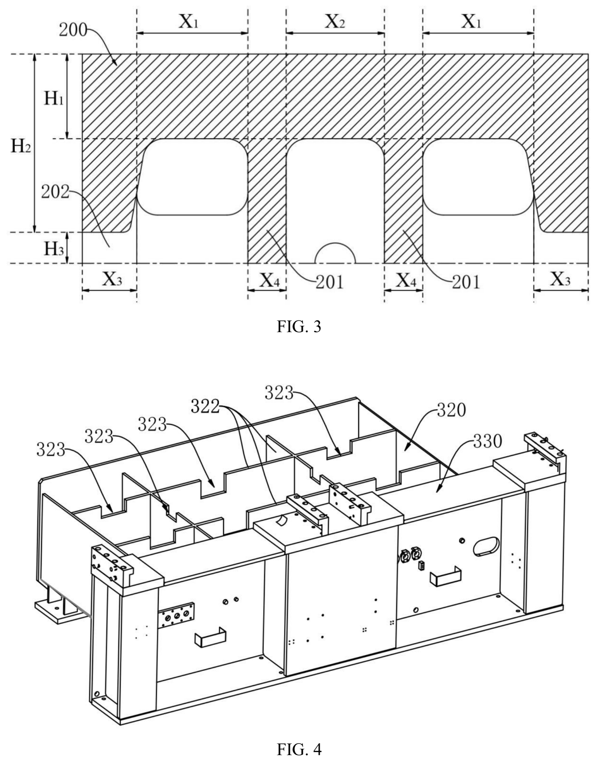

Specifically, as shown in FIG. 4, the oil tank 320 is divided into a plurality of regions through a plurality of partition plates 322 staggered horizontally and vertically. Upper portions of at least part of the partition plates 322 are provided with notches 323 to enable air circulation between the divided adjacent regions. Lower portions of at least part of the partition plates 322 are provided with notches 323 to enable oil circulation between the divided adjacent regions.

It may be understood that a middle region of the oil tank 320 is a main oil return region and a main oil return channel, and two sides of the oil tank 320 are secondary oil return regions. In the double injection mode, through arrangement of the partition plates 322, impact caused by oil return and flow can be effectively reduced, such that oil flow is more orderly. Thus, noise and vibration are reduced, and ejection stability and reliability of the injection modules 400 are improved. Meanwhile, the notches 323 are provided at the lower portions of the partition plates 322. A circulation speed is reduced while oil is ensured to flow in all the regions of the oil tank 320. Thus, cooling and heat dissipation of the oil, separation of bubbles and precipitation of impurities are facilitated.

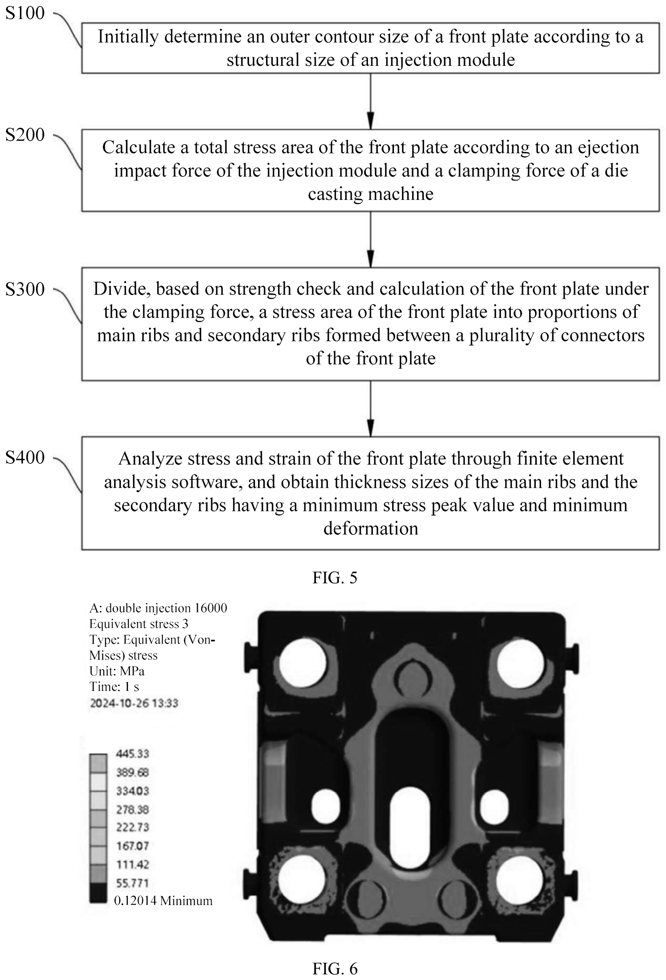

Another aspect of the present invention provides a method for designing a front plate of the die casting machine with single and double injection. As shown in FIG. 5, one preferred embodiment includes the following design steps:

S100: an outer contour size of a front plate 200 is initially determined according to a structural size of an injection module 400;

S200: a total stress area of the front plate 200 is calculated according to an ejection impact force of the injection module 400 and a clamping force of the die casting machine;

S300: based on strength check and calculation of the front plate 200 under the clamping force, a stress area of the front plate 200 is divided into proportions of main ribs 201 and secondary ribs 202 formed between the plurality of connectors of the front plate; and

S400: stress and strain of the front plate 200 are analyzed through finite element analysis software, and thickness sizes of the main ribs 201 and the secondary ribs 202 having a minimum stress peak value and minimum deformation are obtained.

It may be understood that, for S100, the outer contour size of the front plate 200 mainly depends on a mounting size of the injection modules 400 in the double injection mode. Specifically, a width of a single injection module 400 may be set as A, and a minimum distance between two injection modules 400 normally mounted may be ensured to be B. As positions of ejection rods of the injection modules 400 are generally located in the middle of the injection modules 400, a minimum distance between two connectors on the front plate 200 for die casting with double injection is A+B. Then, based on design sizes of the connectors, whether a width of the main rib 201 between the adjacent connectors satisfies a basic structural strength requirement is analyzed. If a width of the main ribs 201 satisfies a structural strength requirement, a contour size L of the front plate 200 in a width direction is at least A+B+2C. C denotes a distance from an edge of the secondary rib 202 satisfying basic structural strength to a center of the connector at the identical side. If the width of the main ribs 201 does not satisfy the basic structural strength requirement, the contour size L of the front plate 200 in the width direction is at least A+B+2C+D. D denotes an increase of the width of the main ribs 201, such that the widened main ribs 201 satisfy the basic structural strength requirement. Generally, a structure of the front plate 200 uses a positive-direction structure, such that tie bars mounted at four corners of the front plate 200 are adjacent and equidistant in horizontal and vertical directions.

It should be known that the width of the main ribs 201 satisfying basic structural strength may be calculated through a simple strength calculation formula, or may be selected according to experience of those skilled in the art. The size is only an initial size, and may be optimized later.

In the embodiment, S 100 only determines a basic contour size of the front plate 200. As can be seen from FIG. 1 to FIG. 3, regions of the connectors of the front plate 200 are designed with avoidance spaces. In this way, mounting of the ejection rods at positions of the connectors may be facilitated later, and meanwhile, a weight of the front plate 200 may be reduced. For a design of the front plate 200, it is necessary to enlarge regions of the avoidance spaces as much as possible in a case of satisfying structural strength and facilitating mounting of the ejection rods. In this way, the weight of the front plate 200 can be reduced as much as possible, and cost can be saved. Then, sizes of the regions of the avoidance spaces at the positions of the connectors may be determined according to the total stress area S required by the front plate 200. That is, the total stress area S of the front plate 200 determines impact resistance of the front plate 200. In this way, when the basic contour size of the front plate 200 is determined, the total stress area S may be calculated to obtain a total area of the regions of the avoidance spaces. Then, specific structures can be divided. For convenience of understanding, a specific calculation process of the total stress area S in S200 will be described in detail below.

Specifically, S200 includes the following process:

S210: a clamping force $F_S$ applied to the front plate 200 by a clamping cylinder is calculated according to output pressure P of the clamping cylinder of the die casting machine and a piston rod diameter D of the clamping cylinder;

S220: the ejection impact force $F_C \leq kF_S$ applied to the front plate 200 by the injection module 400 is set, where k denotes a safety factor; and

S230: the total stress area S of the front plate 200 is calculated according to a formula $F_C = P_0 \cdot S$, where $P_0$ denotes output pressure of an injection cylinder of the injection module 400.

It may be understood that, when the die casting machine performs die casting, a die casting mold on the front plate 200 needs to ensure mold closing stability under the clamping force applied by a clamping mechanism (not shown in the figure), so the front plate 200 may be supported by the clamping force of the clamping mechanism to resist ejection impact of the injection module 400 during die casting. However, in order to ensure working safety of a die casting process, it is necessary to ensure that the ejection impact force applied to the front plate 200 by the injection module 400 cannot exceed the clamping force too much. Otherwise, the clamping mechanism may fail. Thus, a value of the safety factor k in S220 is generally 1.05 to 1.15, and preferably 1.1.

It should be known that, after the total stress area S of the front plate 200 is calculated through S210 to S230, it is only necessary to subtract the total stress area S from a total cross-sectional area of the front plate 200 to obtain a total area of the regions of the avoidance spaces corresponding to the three connectors. In this way, finally, only by accurately calculating structural sizes of the main ribs 201 and the secondary ribs 202 based on strength check, proportions of the main ribs 201 and the secondary ribs 202 in the total stress area S may be obtained, such that width sizes of the main ribs 201 and the secondary ribs 202 may be determined based on the positions of the connectors, and meanwhile, sizes of the regions of the avoidance spaces at the positions of the connectors may be determined. For convenience of understanding, a calculation process of the proportions of the main ribs 201 and the secondary ribs 202 in the total stress area S will be described in detail below.

In the embodiment, S300 includes the following process:

S310: a width size relational expression between the main ribs 201 and the secondary ribs 202 is obtained according to the outer contour size of the front plate 200;

S320: dangerous section division is performed on all stressed sections of the front plate 200 according to structural distribution of the main ribs 201 and the secondary ribs 202;

S330: a standard is set, and a centroid is calculated according to a size and a position of each dangerous section obtained in S320;

S340: an inertia moment of each dangerous section to a centroidal axis is calculated according to a centroid position expression obtained in S330;

S350: an obtained inertia moment expression is substituted into a bending moment calculation formula, and an expression of maximum bending stress at the dangerous section is derived; and

S360: iteration is performed on the expression of the maximum bending stress according to a limited clamping force and safe stress of a material, and optimal width sizes of the main ribs 201 and the secondary ribs 202 are obtained.

It may be understood that, when the centroid in S330 is calculated, the standard is determined according to a stressed position of the front plate 200. In a single injection mode, the stressed position of the front plate 200 is located at the middle connector. In this case, the standard may be a horizontal line passing a center of the middle connector. In a double injection mode, the stressed position of the front plate 200 is located at the connectors at two sides. In this case, the standard may be a horizontal line passing centers of the connectors at the two sides. In actual use, if the injection modules 400 used in the single injection mode and the double injection mode have an identical model, the three connectors are equal in height. In this case, the standard is unified. If the injection modules 400 used in the single injection mode and the double injection mode have different models, the three connectors are unequal in height. In this case, two standards are set. A specific standard may be selected according to a worst working condition suffered by the front plate 200 in the two injection modes.

In order to facilitate further understanding, S300 will be described in detail below with specific parameters.

Specifically, as shown in FIG. 3, assuming that the standard passes a midpoint of the middle connector and divides the front plate 200 into upper and lower portions from the middle, and the regions of the avoidance spaces corresponding to the three connectors have consistent heights and are flush with each other, a width of the regions of the avoidance spaces corresponding to the connectors at the two sides may be set as $X_1$, a width of the region of the avoidance space corresponding to the middle connector may be set as $X_2$, the width of the main ribs 201 may be set as $X_4$, the width of the secondary ribs 202 may be set as $X_3$, a height from an upper end of the region of the avoidance space corresponding to the connector to an upper edge of the front plate 200 may be set as $H_1$, a height from an upper edge of the secondary rib 202 to the upper edge of the front plate 200 may be set as $H_2$, and a height from the upper edge of the secondary rib 202 to the standard may be set as $H_3$.

Through the above analysis, the total stress area $S=4(X_3 \times H_2)+4(X_1 \times H_1)+4[X_4 \times (H_2+H_3)]+2(X_2 \times H_1)$ and a unilateral width $L=2X_1+X_2+2X_3+2X_4$ of the front plate 200 may be obtained. Then, when L and S are known, a relational expression of the width $X_4$ of the main ribs 201 and the width $X_3$ of the secondary ribs 202 in S310 may be obtained.

In S320, dangerous section division is mainly for convenience of subsequent centroid calculation. According to the structural distribution of the main ribs 201 and the secondary ribs 202, divided dangerous section regions are the main ribs 201 and extending regions of two ends of the main ribs, the secondary ribs 202 and extending regions of two ends of the secondary ribs, and corresponding regions of an upper portion and a lower portion of each connector.

The centroid of the dangerous section calculated in S330 is an equivalent centroid y of all the dangerous sections. A specific calculation formula is as follows:

$$y = \frac{\sum(S_i \times h_i)}{\sum S_i} = \frac{\sum(S_i \times h_i)}{S}.$$

$S_i$ denotes an area corresponding to each dangerous section, and $h_i$ denotes a height of a center point corresponding to each dangerous section relative to the standard. For convenience of understanding, with the dangerous section corresponding to the region of the upper portion of the middle connector as an example, if an area of the dangerous section is set as $S_1$ and a corresponding centroid height is set as $h_1$, $S_1= X_2 \times H_1$, and $h_1=H_2-0.5H_1+H_3$.

In S340, a calculation formula of an inertia moment $J_y$ of each dangerous section to an axis of the equivalent centroid y is as follows:

$$J_y = \sum J_{yi} + \sum[s_i \times (h_i - y)^2].$$

$J_{yi}$ denotes the inertia moment of each dangerous section. With the dangerous section corresponding to the region of the upper portion of the middle connector as an example, the inertia moment $J_{y1}=X_2 \times H_1^3/12$ of the dangerous section is set.

In S350, according to a maximum bending moment $M_{max}$ of the front plate 200, a calculation formula of the maximum bending stress $\sigma_b$ at the dangerous section may be obtained as follows:

$$\sigma_b= (M_{max} \times y)/J_y.$$

It may be understood that the maximum bending moment $M_{max}$ may be calculated according to 1.1 times of the clamping force. Through all the above steps, the obtained calculation formula of the maximum bending stress $\sigma_b$ is an expression about the width of the main ribs 201 and the secondary ribs 202. Then, the maximum bending stress $\sigma_b$ is compared with safe stress [σ] specified by the national standard or industry standard, such that expressions of the widths of the main ribs 201 and the secondary ribs 202 with respect to the safety stress [σ] may be obtained. Then, width sizes of the main ribs 201 and the secondary ribs 202 corresponding to the front plate 200 having optimal structural strength and weight may be obtained through formula iteration. Then, based on the obtained width sizes of the main ribs 201 and the secondary ribs 202, a structural size of the region of the avoidance space corresponding to each connector may be reversely determined.

It should be known that a structural size of an end surface of the front plate 200 may be determined through S310 to S360, and the thickness of the front plate 200 is mainly reflected by an anti-deformation ability after ejection impact. Thus, it is difficult to obtain an optimal thickness size of the front plate 200 through numerical calculation. However, a finite element method may obtain deformation of the front plate 200 from a microscopic view through finite element modeling, so the embodiment may obtain thickness sizes of the main ribs 201 and the secondary ribs 202 through finite element modeling. There are many common types of finite element analysis software. For convenience of understanding, detailed description will be provided below with finite element analysis through ANSYS software as an example.

Specifically, a structural model of the front plate 200 is established through the ANSYS software, and constraints are set to the established model and loads are applied to the established model so as to simulate an actual working condition. In order to verify accuracy of analysis results, finite element analysis is performed on three front plates 200 having different thickness sizes below. The three front plates 200 having different thickness sizes are defined as a first front plate, a second front plate, and a third front plate respectively. In the first front plate, a thickness of the main rib 201 is 412 mm, and a thickness of the secondary rib 202 is 276 mm. In the second front plate, a thickness of the main rib 201 is 462 mm, and a thickness of the secondary rib 202 is 326 mm. In the third front plate, a thickness of the main rib 201 is 212 mm, and a thickness of the secondary rib 202 is 400 mm.

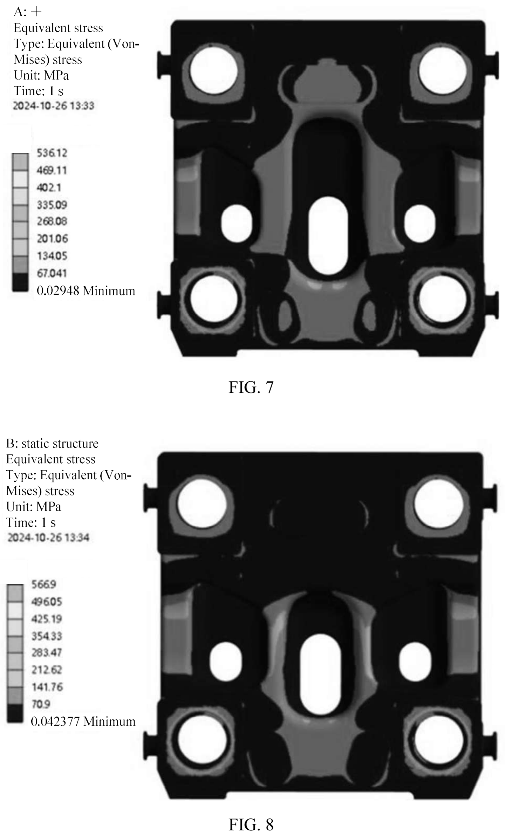

FIG. 6 to FIG. 8 show stress contour plots of the first front plate to the third front plate sequentially. As can be seen from the figures, in a die casting process, the front plate 200 mainly bears an impact force from the injection module 400. A part where an injection cylinder is mounted bears direct action of an injection force, and has a higher stress level. Because of force transmission and concentration, a joint between a connecting column and a reinforcing rib is likely to bear higher stress. The borne maximum stress is 94 MPa and 91 MPa when the thickness of the main ribs 201 is 412 mm and the thickness of the secondary ribs 202 is 276 mm. The stress is 97 MPa and 104 MPa when the thickness of the main ribs 201 is 462 mm and the thickness of the secondary ribs 202 is 326 mm. The stress is 149 MPa and 114 MPa when the thickness of the main ribs 201 is 212 mm and the thickness of the secondary ribs 202 is 400 mm. To sum up, in the embodiment, when the thickness of the main ribs 201 is 1.5 times that of the secondary ribs 202, the borne stress is lowest. When the thickness of the main ribs 201 is 1.4 times that of the secondary ribs 202, the borne stress is slightly increased. When the thickness of the main ribs 201 is less than that of the secondary ribs 202, the borne stress is obviously increased.

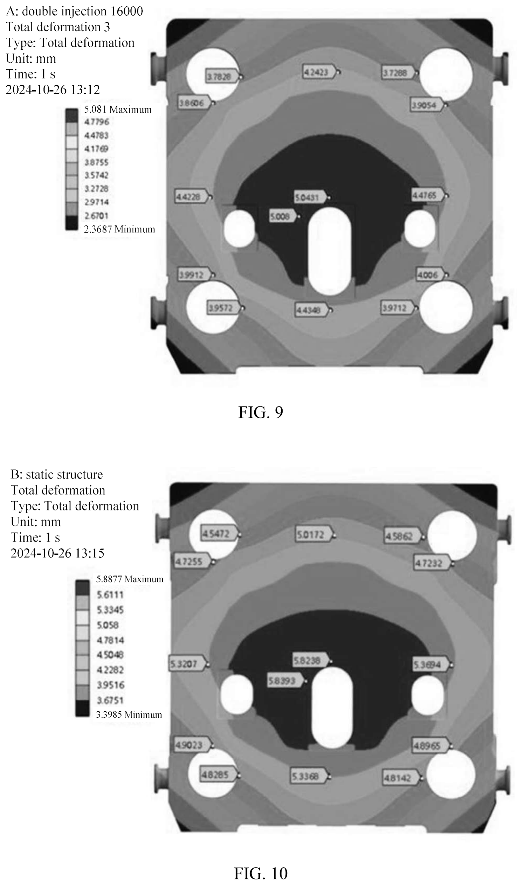

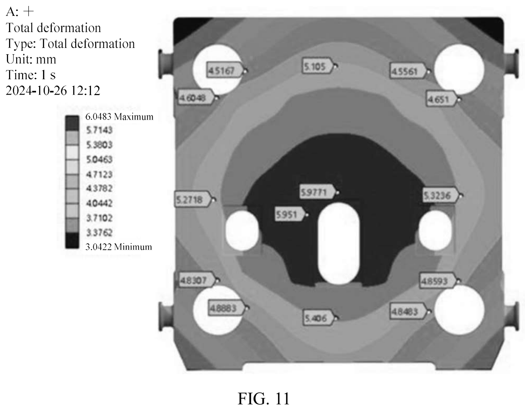

FIG. 9 to FIG. 11 show strain contour plots of the first front plate to the third front plate sequentially. The generated maximum strain is 5.081 mm when the thickness of the main ribs 201 is 412 mm and the thickness of the secondary ribs 202 is 276 mm. The generated maximum strain is 5.8877 mm when the thickness of the main ribs 201 is 462 mm and the thickness of the secondary ribs 202 is 326 mm. The generated maximum strain is 6.0483 mm when the thickness of the main ribs 201 is 212 mm and the thickness of the secondary ribs 202 is 400 mm. In the embodiment, when the thickness of the main ribs 201 is 1.5 times that of the secondary ribs 202, the generated deformation is smallest. When the thickness of the main ribs 201 is 1.4 times that of the secondary ribs 202, the generated deformation is increased. When the thickness of the main ribs 201 is less than that of the secondary ribs 202, the generated deformation is further increased. Thus, in the embodiment, the thickness of the main ribs 201 is preferably 1.5 times that of the secondary ribs 202.

What are described above describe basic principles, essential features and advantages of the present invention. It should be understood by those skilled in the art that the present invention is not limited by the above embodiments, the above embodiments and the description only illustrate the principle of the present invention, various changes and improvements can be made to the present invention without departing from the spirit and scope of the present invention, and these changes and improvements all fall within the claimed scope of the present invention. The claimed protection scope of the present invention is defined by the appended claims and their equivalents.

## Claims

1. A die casting machine with single and double injection, **characterized by** comprising a front plate, an injection lower frame, and an injection module, wherein the front plate and the injection lower frame are fixed and spaced apart;

   if a quantity of the injection module is one, the injection module is mounted in a middle of the injection lower frame and is matched with a connector in a middle of the front plate;

if a quantity of the injection modules is two, the injection modules are symmetrically mounted at two sides of the injection lower frame and are matched with connectors at two sides of the front plate respectively;

regions between the connector in the middle of the front plate and the connectors at the two sides of the front plate are main ribs, and regions between the connectors at the two sides of the front plate and side edges of the front plate are secondary ribs;

a thickness of the main ribs is greater than a thickness of the secondary ribs, and a width of the main ribs is less than a width of the secondary ribs; and

a design process of the front plate comprises the following steps:

S100: initially determining an outer contour size of the front plate according to a structural size of the injection module;

S200: calculating a total stress area of the front plate according to an ejection impact force of the injection module and a clamping force of the die casting machine;

S300: preliminarily dividing, based on strength check and calculation of the front plate under the clamping force, a stress area of the front plate into proportions of the main ribs and the secondary ribs; and

S400: analyzing stress and strain of the front plate through finite element analysis software, and obtaining size data of the main ribs and the secondary ribs having a minimum stress peak value and minimum deformation.

2. The die casting machine with single and double injection according to claim 1, **characterized in that** the thickness of the main ribs is 1.4 times to 1.6 times the thickness of the secondary ribs; and the width of the main ribs is 0.5 times to 0.7 times the width of the secondary ribs.

3. The die casting machine with single and double injection according to claim 1, **characterized in that** the injection lower frame comprises a connecting section, an oil tank, and a mounting section that are sequentially arranged;

the connecting section is fixedly connected to a clamping lower frame configured to mount the front plate, the mounting section is configured to mount the injection module, and the oil tank is provided with three oil inlets in a width direction;

and

if the mounting section is provided with one injection module, the one injection module is connected to a middle one of the three oil inlets, and if the mounting section is provided with two injection modules, the two injection modules are connected to other two of the three oil inlets at two sides respectively.

4. The die casting machine with single and double injection according to claim 3, **characterized in that** the oil tank is divided into a plurality of regions through a plurality of partition plates staggered horizontally and vertically;

upper portions of at least part of the plurality of partition plates are provided with notches to enable air circulation between divided adjacent regions of the plurality of regions; and

lower portions of at least part of the plurality of partition plates are provided with notches to enable oil circulation between the divided adjacent regions.

5. The die casting machine with single and double injection according to claim 1, **characterized in that** the step S200 comprises the following process:

S210: calculating a clamping force ($F_S$) applied to the front plate by a clamping cylinder according to output pressure (P) of the clamping cylinder of the die casting machine and a piston rod diameter (D) of the clamping cylinder;

S220: setting the ejection impact force ($F_C$) to be less than $kF_S$ applied to the front plate by the injection module, **characterized in that** k denotes a safety factor; and

S230: calculating the total stress area (S) of the front plate according to a formula $F_C = P_0 \cdot S$, **characterized in that** $P_0$ denotes output pressure of an injection cylinder of the injection module.

6. The die casting machine with single and double injection according to claim 5, **characterized in that** a value of the safety factor (k) is 1.05 to 1.15.

7. The die casting machine with single and double injection according to claim 1, **characterized in that** the step S300 comprises the following process:

S310: obtaining a width size relational expression between the main ribs and the secondary ribs according to the outer contour size of the front plate;

S320: performing dangerous section division on all stressed sections of the front plate according to structural distribution of the main ribs and the secondary ribs;

S330: setting a standard, and calculating a centroid according to a size and a position of each dangerous section obtained in S320;

S340: calculating an inertia moment of each dangerous section to a centroidal axis according to a centroid position expression obtained in S330;

S350: substituting an obtained inertia moment expression into a bending moment calculation formula, and deriving an expression of maximum bending stress at the dangerous section; and

S360: performing iteration on the expression of the maximum bending stress according to a limited clamping force and safe stress of a material, and obtaining optimal width sizes of the main ribs and the secondary ribs.

8. The die casting machine with single and double injection according to claim 7, **characterized in that** the step S300 comprises the following process: in the step S330, for the front plate, using a horizontal line passing a center of the connector in the middle of the front plate as a standard, or using a horizontal line passing centers of the connectors at the two sides of the front plate as a standard.

FIG. 1

FIG. 2

FIG. 3

FIG. 4

| S100 | Initially determine an outer contour size of a front plate according to a structural size of an injection module |
|---|---|

| S200 | Calculate a total stress area of the front plate according to an ejection impact force of the injection module and a clamping force of a die casting machine |
|---|---|

| S300 | Divide, based on strength check and calculation of the front plate under the clamping force, a stress area of the front plate into proportions of main ribs and secondary ribs formed between a plurality of connectors of the front plate |
|---|---|

| S400 | Analyze stress and strain of the front plate through finite element analysis software, and obtain thickness sizes of the main ribs and the secondary ribs having a minimum stress peak value and minimum deformation |
|---|---|

FIG. 5

A: double injection 16000
Equivalent stress 3
Type: Equivalent (Von-Mises) stress
Unit: MPa
Time: 1 s
2024-10-26 13:33

445.33
389.68
33403
278.38
222.73
167.07
111.42
55.771
0.12014 Minimum

FIG. 6

A: +
Equivalent stress
Type: Equivalent (Von-
Mises) stress
Unit: MPa
Time: 1 s
2024-10-26 13:33

536.12
469.11
402.1
335.09
268.08
201.06
134.05
67.041
0.02948 Minimum

FIG. 7

B: static structure
Equivalent stress
Type: Equivalent (Von-
Mises) stress
Unit: MPa
Time: 1 s
2024-10-26 13:34

566.9
496.05
425.19
354.33
283.47
212.62
141.76
70.9
0.042377 Minimum

FIG. 8

A: double injection 16000
Total deformation 3
Type: Total deformation
Unit: mm
Time: 1 s
2024-10-26 13:12

FIG. 9

B: static structure
Total deformation
Type: Total deformation
Unit: mm
Time: 1 s
2024-10-26 13:15

FIG. 10

A: +
Total deformation
Type: Total deformation
Unit: mm
Time: 1 s
2024-10-26 12:12

6.0483 Maximum
5.7143
5.3803
5.0463
4.7123
4.3782
4.0442
3.7102
3.3762
3.0422 Minimum

FIG. 11

Europäisches
Patentamt

European
Patent Office

Office européen
des brevets

# EUROPEAN SEARCH REPORT

**Application Number**

EP 25 22 7269

## DOCUMENTS CONSIDERED TO BE RELEVANT

| Category | Citation of document with indication, where appropriate, of relevant passages | Relevant to claim |
|---|---|---|
| X | CN 114 603 103 A (NINGBO LIJU TECH CO LTD) 10 June 2022 (2022-06-10) * claims 1,2,5,6,8; figure 1 * * see the machine-translated appendix * ----- | 1-8 |
| X | JP 2011 073179 A (DAIHATSU MOTOR CO LTD; UBE MACHINERY CORP LTD) 14 April 2011 (2011-04-14) * paragraphs [0001], [0002]; figures 1,4,5,7,8 * ----- | 1-8 |

**CLASSIFICATION OF THE APPLICATION (IPC)**

INV.
B22D17/20
B22D17/22
B29C45/00

**TECHNICAL FIELDS SEARCHED (IPC)**

B22D
B29C

The present search report has been drawn up for all claims

| Place of search | Date of completion of the search | Examiner |
|---|---|---|
| The Hague | 12 May 2026 | Momeni, Mohammad |

EPO FORM 1503 03.82 (P04C01)

## ANNEX TO THE EUROPEAN SEARCH REPORT
## ON EUROPEAN PATENT APPLICATION NO.

EP 25 22 7269

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2026

| Patent document cited in search report | | Publication date | Patent family member(s) | | Publication date |
|---|---|---|---|---|---|
| CN 114603103 | A | 10-06-2022 | NONE | | |
| JP 2011073179 | A | 14-04-2011 | JP | 5425581 B2 | 26-02-2014 |
| | | | JP | 2011073179 A | 14-04-2011 |

EPO FORM P0459

For more details about this annex : see Official Journal of the European Patent Office, No. 12/82